# EUROPEAN PATENT SPECIFICATION

(11) **EP 2 900 365 B1**
(45) Date of publication and mention of the grant of the patent: **08.05.2019**
(21) Application number: 13750897.4
(22) Date of filing: 23.08.2013
(51) Int. Cl.: B01J 20/26, B01J 20/285, B01D 15/02, B01D 15/20, G01N 30/56, C08F 212/36, C08J 9/00

(54) **METHOD OF PREPARING A SEPARATION COLUMN OR A SEPARATION CHANNEL IN A MICROFABRICATED DEVICE**
VERFAHREN ZUR HERSTELLUNG EINER TRENNSÄULE ODER EINES TRENNKANALS IN EINER MIKROVORRICHTUNG
PROCÉDÉ DE PRÉPARATION D'UNE COLONNE DE SÉPARATION OU D'UN CONDUIT DE SÉPARATION DANS UN MICRO-DISPOSITIF

(30) Priority: 23.08.2012 SE 1250948; 23.08.2012 US 201261692372 P
(43) Date of publication of application: 05.08.2015
(73) Proprietor: HELSE STAVANGER HF, 4068 STAVANGER (NO)
(72) Inventor: BREDE, Cato, N-4120 Tau (NO)
(74) Representative: Brann AB
(86) International application number: PCT/EP2013/067543
(87) International publication number: WO 2014/029869

(56) References cited:
- WO-A2-2004/064974
- WO-A2-2007/149498
- WO-A2-2009/040826
- TUNC Y ET AL: "Acrylic-based high internal phase emulsion polymeric monolith for capillary electrochromatography", JOURNAL OF CHROMATOGRAPHY, ELSEVIER SCIENCE PUBLISHERS B.V, NL, vol. 1217, no. 10, 5 March 2010 (2010-03-05), pages 1654-1659, XP026926186, ISSN: 0021-9673, DOI: 10.1016/J.CHROMA.2010.01.020 [retrieved on 2010-01-18]

## Description

### Field of the invention

The present invention relates to the preparation of separation columns and separation channels in a microfabricated device.

### Background of the invention

Proteomics may be defined as a large scale analysis of proteins, and holds promise for future biomarker discovery in clinical research. In bottom-up proteomics, the proteins of a proteome to be analyzed are identified and their amino acid sequences and post-translational modifications characterized by proteolytic enzyme digestion, followed by analysis of the resulting peptides by mass spectrometry (MS). If the number of proteins is large, the number of corresponding peptides is even larger, as many proteins produce more than 10 peptides when cut with specific enzymes such as trypsin. Therefore, powerful tools of separation and detection have to be applied for a successful proteomics experiment. Liquid chromatography coupled with electrospray mass spectrometry (LC-MS) or tandem mass spectrometry (LC-MS/MS) offers the solution for separation and selective detection of such an overwhelming amount of peptides. Molecular ions are created at atmospheric pressure by electrospray ionization (ESI), which is considered to be a concentration sensitive process.

Sensitivity can be improved by using chromatography columns with low internal diameter (ID), as the peptides will then elute in a lower volume and are therefore present at higher concentrations. In theory, this relative increase in concentration will provide a corresponding increase in signal. In this way, a more sensitive analysis will be provided by using a column with a very low ID. Thus, for example, it can be shown that in theory, downscaling the column ID from 4.6 to 0.02 mm in liquid chromatography separation of peptides would give a relative increase of concentration of separated peptides (and thereby a corresponding increase in sensitivity gain in electrospray mass spectrometry) of about 52,900 times. This type of downscaling is very common in proteomics work today, and typically by using columns with 0.075 mm ID, the mobile phase flow is reduced to a few hundred nanoliters per minute.

As other workers have shown, it is even possible to downscale the liquid chromatography further, in order to achieve an extremely sensitive LC-MS analysis. However, because of the difficulty in filling a very narrow capillary tube with particles, commercially available packed columns are yet technologically limited to 0.075 mm ID. In theory, there are no such limitations and difficulties associated with preparation of monolithic columns.

In a monolithic column, the separation medium is in a format that can be compared to a single large "particle" that does not contain interparticular voids, in other words a continuous medium. As a result, all the mobile phase must flow through the stationary phase. This convective flow greatly accelerates the rate of mass transfer. In contrast to diffusion, which is the typical driving force for mass transfer within the pores of particulate stationary phases during chromatographic processes, convective flow through the pores enables a substantial increase in the speed of separation.

Because of the advantages they offer over packed columns, the development of continuous separation media has attracted considerable attention in recent years. Basically, two types of monolithic material have been used, the first one based on modified silica gel and the second one on organic polymers. However, while the continuous silica gel media shrink during the polymerization process, making it difficult to prepare practically useful silica gel based monolithic columns with small inner diameters, these difficulties are not observed when preparing monolithic columns by *in situ* polymerization of suitable organic monomers in fused silica capillaries with inner diameters as small as 0.1 mm.

The polymerization mixture can be prepared using a wide variety of monomers, allowing a nearly unlimited choice of both matrix and surface chemistries for variation of retention and separation selectivity. Acrylamide, polystyrene, and methacrylate monolithic columns may be mentioned as frequently used examples. A porogen or porogenic solvent is typically added for controlling the porosity of the resulting monolith.

Numerous polymer monolithic columns, including narrow ID capillary columns, and methods for their preparation have been described in the prior art.

WO 2007/149498 A2 discloses a separation capillary column, or channel in a micro fabricated device, prepared by *in situ* copolymerization of a functional monomer and a crosslinking monomer, which enhances the strength of the polymer matrix. Styrenic based monomers, such as styrene and divinylbenzene or meth/acrylic based monomers such as butyl or stearyl methacrylate and ethylene glycol dimethacrylate, are preferred. A polar porogenic solvent (or porogen), such as ethanol, methanol, propanol or acetonitrile, is used in the reaction. Columns can be prepared in a robust fashion with a very narrow ID, e.g., 5-15 µm, making them suitable for use in ultratrace LC/MS proteomic analysis.

WO 2004/064974 A2 discloses a method of preparing an ultra-nanoscale-LC monolithic separation medium for use in capillary columns, or channels in micro fabricated devices (microchips), and capillaries prepared by the method. The application of a moderate positive pressure to both ends of the capillary during the monolith polymerization process permits the preparation of monolithic capillary columns having very low ID, e.g., 25 µm and smaller, with enhanced mass transfer properties and low back pressures, and excellent column-to-column reproducibility of retention times. In a preferred embodiment, styrene was chosen as a monomer, tetrahydrofuran (THF) and n-octanol were chosen as inert porogens, and divinylbenzene (DVB) was the crosslinker. Azobisisobutyronitrile (AIBN) served as radical initiator. Other suitable crosslinkable monomers include the methacrylates.

US 7,473,367 B2 discloses a method of making a monolithic chromatography column, by adding a polymerization mixture containing a porogen to a chamber, and polymerizing the polymerization mixture in the chamber to form a monolithic chromatography polymer plug in the shape of a chromatography column, at least part of the polymerizing being performed by applying sufficient pressure to the polymerization mixture to prevent wall channel openings in the polymerized monolithic polymer plug and while heating the polymerization mixture at a controlled elevated temperature. Exemplary reversed phase media are based on poly(styrene-co-divinylbenzene), poly(stearyl methacrylate-co-divinylbenzene) or poly(butyl methacrylate-co-ethylene glycol dimethacrylate).

Similar monolithic columns and methods for their preparation are disclosed in WO 2006/017620 A2, US 2010/0038298 A1, WO 00/15778 A1, EP 2335820 A1, US 2011/0086409 A1 and WO 00/46281 A2.

Y Tunç et al., J. Chromat. A 2010, vol. 1217, pages 1654-1659 discloses a method of preparing a separation capillary column comprising the steps of:
providing an unfilled column or a microfabricated device comprising an unfilled channel, whose inner walls have been activated with 0.2 M NaOH and functionalized with 3-(trimethoxysilyl)propyl methacrylate;
filling said column with an emulsified polymerization mixture comprising a mixture of 80 vol% of isodecyl acrylate ("functional monomer") and 20 vol% of divinylbenzene, Span 80 (sorbitan monooleate) and potassium persulfate as polymerization initiator; and
polymerizing the mixture to form a rigid porous monolithic polymer plug in the column or channel.

Still, very few monolithic products are commercially available, and typically the IDs of these are 0.1 mm and higher. The preparation of narrow ID monolithic columns is difficult because the polymerization process and pre-coating of the capillary tube seem to be dependent on the capillary ID. Therefore, what seems to be a perfectly working solution in vials and even in 0.1 mm ID capillary tubes may not work at all with capillaries of 0.05 mm ID and lower.

It is an object of the present invention to provide a method for preparing an improved monolithic column which may have an ID lower than 0.05 mm and which can conveniently be utilized for sensitive separations of peptides and other molecules. Other objects and advantages will be apparent from the following description.

### Summary of the invention

The above-mentioned object is achieved by the method of the present invention which produces a column, or channel in a microfabricated device, which preferably (but not exclusively) has a narrow inner diameter, with a homogenous monolithic structure inside, and which can be used for sensitive separation of biological as well as non-biological compounds.

According to the present invention, this has been achieved by careful optimization of the total polymerization procedure.

More particularly, the present invention is devised for preparation of monolithic columns (or channels) with an ID which preferably may be lower than 0.05 mm and is based on the selective use of (i) a specific combination of monomers, viz. divinylbenzene (DVB) and iso-decylacrylate (IDA); and (ii) a specific macroporogen or macroporogen mixture, viz. isobutanol or isobutanol/octanol mixture.

In one aspect, the present invention therefore relates to a method of preparing a separation column, or channel in a microfabricated device according to claim 1.

Usually, the rigid monolithic polymer plug formed within the column or channel is washed to remove any remaining unreacted components.

The term "separation" as used herein is to be interpreted in a broad sense and comprises analytical and preparative chromatographic separation as well as solid phase extraction (SPE), including solid phase micro-extraction (SPME). Typical chromatographic applications include analytical liquid chromatography (LC), preparative LC, nano-LC, HPLC.

The material of the column or channel may be selected from a wide variety of different materials. Typical column materials include glass (including fused silica), metals, such as stainless steel, plastics (e.g. polyether ether ketone - PEEK), glass-lined (e.g. borosilicate-lined) or fused silica-lined tubings of stainless steel or plastics.

Typical materials for microfabricated devices, such as lab-on-a-chip (LOC) devices, include glass, ceramics, metals, and organic polymers, such as, e.g., polyolefine, polyimide, PDMS (polydimethylsiloxane).

In a (currently) preferred embodiment of the method, the column, or channel in a microfabricated device, has an inner diameter (ID) of about 0.05 mm or less. Such capillary columns are preferably made of fused silica.

Suitable agents and processes for activation, or pre-functionalization, of the inner wall surface of the unfilled column or channel in order to anchor or bind the polymer monlith to the inner wall surface will be selected depending on the material of the column or channel surface material and may be selected by the skilled person in each particular case or situation. According to the invention, activation comprises covalently binding molecules or groups to the surface which can further be bound to the polymer network at the time of polymerization.

For instance, glass and metal surfaces (e.g. stainless steel) may preferably be pre-functionalized by silanization with a silanization agent capable of binding to the polymer monolith. An exemplary silanization agent comprises γ-(trimethoxysilyl)propyl methacrylate (γMAPS), e.g. 1 to 20 % (v/v). γMAPS is a silanizing agent containing a polymerizable double bond permitting anchoring or the polymer.

Activation of the surface is preferably preceded by an etching with an etching agent to simplify or improve subsequent activation. For a glass surface (including fused silica) etching may, for example, be performed with aqueous sodium hydroxide to roughen the surface, and thereby increase the surface area and provide more activation sites. A steel surface may, for example, be etched with hydrochloric or oxalic acid to generate metal oxide on the surface before the surface is silanized or activated otherwise. Usually, a stainless steel surface has to be cleaned with a solvent (e.g. acetone) to remove surface-protecting machining oil before etching.

Preferably, a "mild" or "soft" procedure is used for etching and silanization of the column or channel walls, especially for silanizing a glass surface, such as the inner surface of a capillary fused silica column or a glass-lined plastic or metal tubing.

The etching is then performed with an alkali solution, preferably an aqueous solution of sodium hydroxide at a concentration of 0.5 to 2 M at a temperature from about 40 to about 70 °C, and the silanization is preferably performed at a temperature of from about 40 to about 70 °C for from about 2 to about 30 minutes, for example from about 2 to about 15 minutes.

The ratio (v/v) of isodecylacrylate to divinylbenzene in the polymerization solution is preferably in the range of from about 1:6 to about 1:100, more preferably from about 1:6 to about 1:40, especially from about 1:10 to about 1:30, for example from about 1:10 to about 1:20.

The at least one porogen is, according to the invention, a macroporogen selected from isobutanol, and a mixture of isobutanol and octanol.

Preferably, the porogens further comprise at least one microporogen selected from chloroform, tetrahydrofuran, toluene and xylene.

In one embodiment, the microporogens are selected from chloroform and xylene.

In another embodiment, the microporogens are selected from toluene and tetrahydrofuran.

It is preferred that the total monomer concentration in the polymerization solution is in the range from about 20 to about 50 % (v/v), for example from about 30 to about 40 % (v/v).

The concentration of isodecylacrylate in the polymerization solution is preferably in the range from about 0.1 to about 15 % (v/v), more preferably from about 1 to about 15 % (v/v), especially from about 1 to about 5 % (v/v).

The polymerization reaction is suitably performed at from about 60 to about 80 °C and at a positive pressure of from about 1 to about 10 bar, preferably for about 20 to about 300 minutes, more preferably from about 20 to about 180 minutes, for example for 20 to 120 minutes.

The polymerization initiator or initiators may be selected from a variety of initiators but is suitably a thermal initiator (thermoinitiator) or UV initiator, and is typically selected from 2,2'-azobisisobutyronitrile (AIBN), lauroyl peroxide (LPO) and benzoyl peroxide (BPO), especially AIBN and/or LPO.

In another aspect, the present disclosure relates to a separation (preferably capillary) column, or separation channel in a microfabricated device, obtainable by the method of the invention.

Still another aspect of the present disclosure relates to a separation (preferably capillary) column, or a microfabricated device (such as a LOC) comprising one or more channels, wherein the column, or at least one channel in the microfabricated device, has been filled with a monolithic polymer by the method according to the invention.

Yet another aspect of the present disclosure relates to the use of such a separation column, or channel in a microfabricated device, according to the above aspects for nanoscale separation.

Another aspect of the present disclosure relates to the use of such a separation column, or channel, according to the above aspects for preparative separation.

Still another aspect of the present disclosure relates to the use of such a separation column, or channel, according to the above aspects for analytical separation.

Yet another aspect of the present disclosure relates to a method of carrying out a chemical analysis method comprising the steps of:
providing a separation column, or channel in a microfabricated device, according to the above aspects;
coupling the column or channel to a detector; and
carrying out the chemical analysis method.

In another aspect, the present disclosure relates to a polymerization composition comprising:
20-40% (v/v) divinylbenzene, preferably 30-40% (v/v), more preferably 25-35% (v/v),
1-15% (v/v) isodecylacrylate preferably 1-5%(v/v),
20-40% (v/v) isobutanol, preferably 25-35% (v/v),
20-40% (v/v) octanol, preferably 25-35% (v/v),
1-10% (v/v) chloroform or xylene or toluene, or a mixture of chloroform and/or xylene and/or toulene.

In a preferred embodiment, the polymerization composition according to the above aspect further comprises 0.15-1.5% (w/w) 2,2'-azobisisobutyronitrile (AIBN) or 0.3-4% (w/w) lauroyl peroxide (LPO).

Examples of biological compounds that may be separated using a separation column, or channel in a microfabricated device, according to the present invention include DNA, proteins, peptides, hormones, neurotransmitters, glycopeptides, glycoproteins, amino acids, carbohydrates, lipids, polysaccharides, fatty acids and phospholipids. Examples of non-biological organic compounds include organic pharmaceuticals, drugs, colouring agents, poisons, pollutants, food additives and metabolites thereof.

In the following, the present invention will be described in more detail. Reference will be made to the accompanying drawings.

### Brief description of the drawings

Figure 1 is a schematic diagram of an in-house made experimental set-up for filling capillary columns with liquid in the preparation of polymer monoliths according to the invention.
Figure 2 is a schematic diagram of a chromatography instrumental set-up with a short piece of 0.05 mm ID polymer monolith used as a trap column to enable sample injection at a high flow rate to shorten the sample injection time.
Figure 3 shows two base peak intensity (BPI) chromatograms A and B obtained in separation of tryptic peptides from cerebrospinal fluid (CSF) sample on A: a commercial column, Acquity nanoUPLC (Waters, USA); and B: a polymer monolithic column prepared by the method of the invention.
Figure 4 is a corresponding BPI chromatogram as in chromatogram B in Figure 3 of tryptic peptides from CSF on a 600 mm long and 0.05 mm ID polymer monolithic column, prepared by the method of the invention, using a short piece of 0.05 mm ID polymer monolith as trap column (as shown in Figure 2) to speed up injection time.
Figure 5 shows ion chromatograms for the separation of two single charged species with m/z 416.2 separated on A: a commercial column, Acquity nanoUPLC (Waters, USA); and B: a polymer monolithic column prepared by the method of the invention.
Figure 6 shows chromatograms for the separation of a single charged species with m/z 613.8 separated on A: a commercial column, Acquity nanoUPLC (Waters, USA); and B: a polymer monolithic column prepared by the method of the invention.
Figure 7 shows chromatograms for the separation of a variety of procyanidins from fruit extract on a 600 mm long and 0.05 mm ID polymer monolith column, prepared by the method of the invention, using a set-up with a trap column.
Figure 8 shows base peak intensity (BPI) chromatograms of tryptic peptides from CSF on a 600 mm long and 0.03 mm ID polymer monolithic column, prepared by the method of the invention, at a mobile phase flow rate of A) 100 nL/min, and B) 200 nL/min.
Figure 9 shows a base peak intensity (BPI) chromatogram for the LC-MS separation of tryptic peptides from supernatant of acetonitrile-precipitated blood plasma proteins using a 150 mm long and 2.1 ID polymer monolith column, prepared by the method of the invention.

### Detailed description of the invention

As mentioned above, the present invention relates to a method of preparing a monolithic column, preferably a capillary column, or channel in a microfabricated device, which is capable of highly sensitive nanoscale separation of peptides and other molecules, and which, preferably, has a narrow inner diameter (ID) of 0.05 mm or lower.

While the invention is not limited regarding the inner diameter or material of the column or channel, the following description will to a large extent be related to fused silica capillary columns.

Before describing the invention further, a general description of monolithic columns and their preparation is given below.

### Polymer monolithic column

A monolithic chromatographic stationary phase consists of a single piece of highly porous material which does not contain interparticular voids typical of packed chromatographic beds. Most of the pores inside the monolith are open forming an interconnected network of channels.

To prepare an organic polymer capillary monolithic column, or channel in a microfluidic chip, a fused silica capillary is typically filled with a polymerization mixture containing appropriate amounts of a monomer, a cross-linking monomer, an initiator for polymerization, and a mixture of porogenic solvents. The capillary is sealed at both ends, and the polymerization is initiated by heating or by ultraviolet (UV) radiation. Typically, a dinitrile or azo-initiator, such as AIBN, or peroxide initiator, such as LPO or BPO, which decomposes when heated to form free radicals (thermal initiator), is used. While the monomers, including cross-linking agent, in the polymerization mixture control the polarity of the final monolithic material, the pore-size distribution will be a result of several conditions, including the composition of the non-reactive porogenic solvent mixture.

In contrast to standard suspension polymerization, the synthesis of monolithic columns proceeds in an unstirred mode. In the presence of porogenic solvents, the polymer nuclei start to precipitate from the mixture as a result of both the cross-linking process and the insolubility of the polymer in the solvent mixture. Eventually, a monolithic system is formed with a pore volume fraction approximately corresponding to the volume fraction of the porogens.

The size and morphology of the pores depend on several factors, including polymerization temperature, polymerization time and solvency of the porogens for the resulting polymer. Solvents having a good solvency for the polymer favor the formation of micro- and mesopores, while macropores are generated with solvents that only poorly interact with the polymer.

In order to anchor the monolithic polymer body to the fused silica wall, it is necessary to etch and silanize the capillary tube or channel prior to introducing the polymerization mixture. Otherwise, the column would risk being extruded when used with high mobile phase application pressures. Etching increases the number of reactive groups on the surface area by roughening, whereas silanization provides anchoring sites for the monolith. Typically, silanization is performed with γ-trimethoxy-silylpropyl metacrylate (γMAPS) after treating the inner wall with aqueous sodium hydroxide solution.

### The invention

According to the present invention, careful optimization of the total polymerization procedure outlined above made it possible to prepare polymer monolithic columns having an ID of 0.05 or lower, such as 0.03 or 0.02 mm, with increased sensitivity to permit separation of peptides and other molecules. The method of the invention is, however, not limited to such nanoscale type monolithic columns but also encompasses preparation of larger diameter monolithic columns, including preparative scale columns typically having ID's as large as 10-100 mm ID (the casting of porous monolithic structures in these columns likely being less expensive than filling with particles).

Exemplary column materials include (but are not limited to) glass, especially fused silica, glass-lined steel or plastics, plastics, e.g. PEEK, metal, such as steel (preferably stainless steel). For narrow diameter columns, fused silica capillary columns are currently preferred.

The method of the invention is based on filling the column with a polymerization mixture containing divinylbenzene (DVB) as major monomer in combination with a smaller amount of iso-decylacrylate as co-monomer, and isobutanol, or a mixture of isobutanol and octanol, as macroporogen, preferably after silanizing the capillary column wall by a relatively "mild" procedure, all at predetermined conditions. Thereby, a homogeneous monolithic structure having sensitive separation characteristics can be prepared.

A non-limiting example of how the inventive method may be performed will now be described:

### Preparation of a polymer monolithic column

### Liquid filling set-up

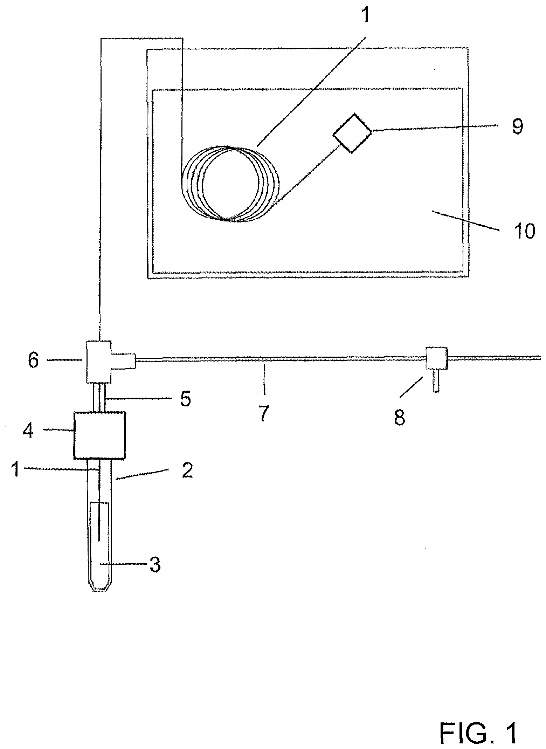

To fill liquids into fused silica capillaries, a set-up of the type illustrated in Figure 1 and to be described in more detail in the Experimental part is advantageously used. In brief, this set-up comprises an in-house made coupling of Swagelok high pressure fittings, using a Teflon ferrule for attaching a 10 mm glass tube containing the liquid, and by using a PEEK-sleeve (0.38 mm ID) for sealing of the capillary. Pressure (0.2-6 bar) is applied by nitrogen flow from the side, by using a T-connector. This setup is more robust and reproducible than using glass vials with septum for sealing of the capillary, as are conventionally used.

Fused silica capillary tubing with ID of 0.05 mm and OD of 0.36 mm is cut to the preferred length, e.g. 1000 mm. The treatment and silanization of the fused silica capillary wall is described in the literature, but is significantly modified in the present invention, as will be described below.

### Silanization procedure

1. Filling the capillary with 2M NaOH and immersion of the capillary in hot water, typically at about 65°C for about 5 min.
2. Rinsing with water and/or acid (e.g. 2 M hydrochloric or sulphuric acid), to neutral pH, then rinsing with water and acetone.
3. Filling the capillary with 10% γ-(trimethoxysilyl)propyl methacrylate (γMAPS) in xylene and immersion of the capillary in hot water, typically at about 65°C for about 20 min, e.g. 7 min.
4. Rinsing with acetone.

The attachment of vinyl-groups to the inside wall will allow the monolith to be firmly attached to the capillary, and will thus prevent extrusion of the monolith by the high pressure mobile phase necessary for the liquid chromatography analysis.

### Polymerization procedure

After silanization, the capillary is filled with a polymerization solution, containing:
1. Monomers (divinylbenzene (DVB) and isodecylacrylate (IDA))
2. Macroporogens (isobutanol, octanol),
3. Microporogens (chloroform, tetrahydrofuran, toluene or xylene, or a combination of two or more of these)
4. Initiator (2,2'-azobisisobutyronitrile (AIBN), lauroyl peroxide (LPO) or benzoyl peroxide (BPO).

After filling, the outlet is capped by a piece of rubber, thus keeping the preferred pressure inside. Subsequently, the capillary is immersed in hot water (65-70°C) for 30-120 min to set off the heat-induced polymerization. All parameters are optimized and controlled very carefully. After polymerization, the rinsing of the monolithic column can be done by using a high-pressure flow of acetonitrile. Thereafter, the column can be used for nanoscale liquid chromatography peptide separations, preferably with mass spectrometric (MS) detection.

The silanization and polymerization steps will now be described in more detail.

### Silanization

As mentioned above, it is necessary to anchor the monolithic structure to the fused silica wall, in order to prevent extrusion when applying mobile phase at a high pressure. This is typically accomplished by etching/ silanization of the inner wall of the capillary tube. Etching roughens the surface to increase the surface area, and silanization introduces reactive groups for covalently binding the polymer network during the polymerization.

In a preferred embodiment of the present invention, the procedure of etching and silanization is significantly improved, in order to keep the fused silica wall activated but still smooth, to prevent polymerization of the silanization agent, γ-trimethoxysilylpropyl methacrylate (γMAPS), and finally to prevent polymerization with a thick sheet near the wall. Instead of high temperature (120 °C) and long time (2h), as conventionally used, the inventive method uses about 40-70 °C, e.g. about 65 °C, and about 2-15 minutes, e.g. about 5 minutes or less, for etching with aqueous 2M NaOH instead of the conventionally used 1M NaOH. This prevents an unacceptable roughening of the wall. Flushing of the capillary is typically done with water and acetone.

Silanization is performed with a solution of about 1-20 % (v/v), preferably about 10% (v/v), γMAPS dissolved in xylene, but with no free radical inhibitor (DPPH) added as has typically been used in the prior art. The silanization reaction is conducted at about 60-70 °C, preferably at about 65 °C, for about 2-30 minutes, typically for about 2-15 minutes, e.g. about 7 minutes. This is in contrast to 120°C and 6 hours which are typically used in prior art silanization. Flushing is by acetone.

This prevents polymerization of γMAPS and allows a more controlled and limited silanization. It also prevents the porous polymer monolithic structure from forming a thick sheet at the wall, and thus with a similar morphology at the wall as in the remaining part of the monolith. Most importantly, however, this soft silanization procedure is still sufficient for efficiently anchoring the monolith. This was evidenced by the monolith not being extruded from the capillary, even when applying a pressure of 10,000 psi.

### Polymerization

As mentioned above, free radical polymerization using AIBN, LPO or BPO as thermal initiator may typically be used to prepare porous polymer monoliths.

Divinylbenzene (DVB) is readily available as an industrial chemical with 80% purity (also containing about 19% ethylvinylbenzene), and has been used in the past for preparing polymer monoliths for liquid chromatography separations. Unless stated otherwise, the term DVB as used herein refers to this technical grade DVB of 80% purity.

Most reported works with porous polymer monolithic columns are using a monomer concentration, including typically DVB and styrene, of nearly 40% (v/v). In the present invention, by using mostly DVB in the polymerization mixture, it is possible to lower the total monomer concentration to about 30-35 % (v/v) or even lower.

Initially, when using such a low DVB concentration, precipitation and inhomogenous polymer formation was obtained when studying the polymerization in vials. This also resulted in gaps and inhomogenous monolith structure within the capillary. Hence, different porogens were explored for producing a more homogenous polymerization.

When only octanol was used as macroporogen, precipitation and inhomogenous polymerization was observed. By adding isobutanol to the polymerization mixture, a more cloudy and homogeneous polymerization was observed in vials. This was unexpected, as isobutanol is not theoretically a good solvent for polydivinylbenzene. The concentration and ratio of octanol and isobutanol can be used to adjust the morphology and macroporosity of the monolith. Typically, a mixture of 20-40% (v/v), preferably 25-35% (v/v) octanol, and 20-40% (v/v), preferably 25-35% (v/v) isobutanol, is used. Isopropanol and cyclohexanol may optionally also be included as macroporogens.

Typically, a microporogen in the form of either chloroform, tetrahydrofuran, toluene or xylene of about 1-10% (v/v), especially 5-10 % (v/v) concentration is used.

It is known from the literature, that the concentration of the microporogen can be used to control the mesoporosity of the monolith. According to the present invention, it was found that addition of a second monomer, isodecylacrylate (IDA), was effective in controlling the porosity of the monolith. Without isodecylacrylate, large macropores were observed, and the monolith was not well suited for separation of peptides. However, by adding only a minor amount of isodecylacrylate, such as 0.1-15% (v/v), typically 1-5 % (v/v), comprising about 1:10 or so compared to the DVB concentration, the pore size was reduced significantly.

Hence, isodecylacrylate is a critical microporogen in the present invention. It is to be noted that DVB itself is a liquid and will act as a microporogen. Additionally, the co-polymerization of DVB with isodecylacrylate will introduce alkyl chains on the polymer surface, thereby contributing to improving the separation of peptides. It is anticipated that DVB reacts faster than isodecylacrylate, and thus creates most of the cross-linked inner structure, while isodecylacrylate may be more present at the surface.

An important observation made is that the use of higher concentrations of isodecylacrylate produced a polymerization with more particle formation, i.e. a suspension of gel or particles or dissolved rubber, resembling glue instead of the desired monolithic structure. Hence, it seems that isodecylacrylate is effective in changing the morphology of the monolith in a different way than other microporogens, such as tetrahydrofuran or chloroform.

Another interesting aspect of using isodecylacrylate is the exceptionally low glass transition temperature (-60°C) of neat isodecylacrylate homopolymer compared to other acrylates. This would suggest that isodecylacrylate introduces a rubber-like copolymerization, by reducing the chain stiffness of the total polymer structure. Thus, a small amount of isodecylacrylate in the polymer is likely to provide extra strength and stability to the monolith, by a process of so-called rubber toughening. Rubber toughening makes the polymer less brittle when stressed, and thus would be beneficial to avoid breaking up of the monolith when the capillary is bent.

A typical polymerization composition for use in the present invention comprises (weight percentages, w/w):

| | |
|---|---|
| DVB | 20-40%, preferably 25-35% |
| Isodecylacrylate | 1-15%, preferably 1-5% |
| Isobutanol | 20-40%, preferably 25-35% |
| Octanol | 20-40%, preferably 25-35% |
| Chloroform | 1-15% (or xylene, or a combination of chloroform and xylene) |

(The same percentage ranges would apply on a volume (v/v) basis, except for chloroform where the range is 1-10 (v/v)%.)

To the above composition, AIBN is added to a concentration of 0.15-1.5% (w/w), and an AIBN to monomers ratio of 0.5-5% (w/w). Alternatively, 0.3-4% LPO may be added.

The conditions for filling and polymerization of a porous polymer monolith within the confinements of a very narrow fused silica capillary are not trivial. The method of the present invention uses, as mentioned above, an elevated pressure for filling of the capillary with the polymerization mixture, preferably using a special device as briefly described above (under the heading "*Liquid filling set-up*") designed for this purpose, and which will be described in more detail in the Experimental part below. The optimal choice of pressure for the polymerization will, of course, be a consequence of the viscosity of the polymerization mixture.

Another important observation was the possibility of capillary forces and static electricity acting upon the polymerization mixture. At a higher pressure, droplet repulsion was observed at the capillary exit, i.e. droplets were pulled upwards on the outside, indicating charge transfer to the polymerization liquid flowing through the silanized capillary. By increasing the viscosity or by using a lower pressure during filling, the repulsion decreased. It was anticipated that phase separation also could take place during filling, due to capillary forces acting upon the liquid.

Hence, the time required to fill the capillary homogenously seems to be of importance. Typically, at least 30 minutes, and in some cases 60-180 minutes or even 60-300 minutes may be used to fill the capillary to secure a homogenous content inside. Filling the capillary when immersed in a hot water bath may also be useful to speed up the preparation process. The time, temperature, pressure, and even knocking or shaking of the capillary during filling were identified as important parameters in the method of the present invention, in order to secure a homogenous and bubble-free filling before polymerization. It is also important to avoid undissolved initiator, pieces of fused silica glass, or other debris from entering the capillary.

The filling pressure will vary with the ID of the capillary column. While, for example, 2 bar may be used for filling a 50 µm capillary tube, 4 bar may be necessary for a 30 µm tube, and 5 bar for a 20 µm tube.

After filling and closing the capillary outlet, the pressure can be increased further before the polymerization is set off by increased temperature. Typically, the polymerization is conducted by immersion of only the filled capillary into hot water (60-80 °C), preferably at a temperature of 65-69 °C, and a pressure of from about 1 bar to about 10 bar.

As mentioned above, the prepared polymer monolith is not bound to confinement into fused silica capillaries, but could also be incorporated into other types of nanoscale separation devices, such as chip-based systems, including e.g. lab-on-a-chip (LOC) devices.

In the following, the present invention will be further illustrated by some non-limiting Examples.

### EXPERIMENTAL PART

### Experimental set-up

To fill liquids into fused silica capillaries, a set-up illustrated in Figure 1 was used. In this set-up, a coiled fused silica capillary 1 is attached to a reagent glass tube 2, here 100 x 10 mm OD, containing liquid 3, through an in-house made coupling of Swagelok™ high pressure fittings. Specifically, tube 2 is attached to a Swagelok™ 10 mm to 1/8" connector 4 and fastened by a 10 mm Teflon™ ferrule. This connector 4 is in turn via a 1/8" OD stainless steel tubing 5 attached to a Swagelok™ T connector 6. The latter is attached to and sealing the 0.36 mm OD fused silica capillary 1 through a Swagelok™ 1/8" to 1/16" connector, into which a 1/16" OD and 0.38 mm ID PEEK sleeve is connected by a 1/16" PEEK ferrule (not shown). A conduit 7 connects the T-connector 6 to a compressed nitrogen source (not shown) via a stop and vent valve 8 through which nitrogen pressures of 0 to 10 bar may be applied. In the illustrated case, the fused silica capillary 1 is capped with a rubber stopper 9 and immersed into a thermostated water bath 10.

### Preparation of polymer monolithic columns

### 600 mm long and 0.05 mm ID column

A 600 mm long and 0.05 mm ID polymer monolithic column was prepared following the procedure described below.
- Approximately 940 mm length of fused silica capillary is cut and inserted into the PEEK sleeve and pushed through the pressure fittings. The inlet side (glass tube side) is inspected by a microscope for debris, and if present, a new cut is made.
- The reagent tube containing 2M NaOH is attached by tightening the Teflon™ ferrule and the capillary is immersed. Pressure is applied (2 bar at gauge), and after 5 minutes flushing, the coiled capillary is immersed into a thermostated water bath (65-68 °C) for 5 minutes, flow may be left on. The coiled capillary is then lifted out of the water bath, the pressure fitting is vented, and the glass tube is removed and changed with a tube containing purified water (18 MOhm). The capillary is flushed for 5 min at 2 bar, then vented and flushed similarly using the glass tube with acetone for 5 min at 2 bar.
- The pressure fitting is then vented and the glass tube containing 10 % yMAPS in xylene is attached. The capillary is flushed for 5 min at 2 bar, and the coiled capillary is immersed into the thermostated water bath (65-68 °C) for 7 minutes, flow may be left on. The coiled capillary is lifted out of the water bath, the pressure fitting is vented, and the glass tube is removed and changed with a tube containing acetone. The capillary is flushed for 5 min at 2 bar.
- The polymerization mixture is made by adding 15.5 mg AIBN into a glass tube, then adding 850 µL divinylbenzene, 90 µL isodecylacrylate, 90 µL chloroform, 800 µL octanol, and 800 µL isobutanol. Weighing between additions allows documentation of the exact working composition. The glass tube is mixed by vortex for 1 min, sonicated for 5 min, and finally mixed by vortex for 1 min.
- The pressure fitting is then vented and the glass tube containing the polymerization mixture is attached. The capillary is flushed for 5 min at 2 bar at room temperature, and the coiled capillary is immersed into the thermostated water bath (68 °C) for 10 minutes for an efficient hot flushing (flow left on). The capillary outlet is then lifted out of the water bath, and firmly capped by piercing the capillary 4-5 mm into a rubber cork or a septum. The whole coiled capillary is then immersed into the water bath for polymerization to take place over a period of 40 min. The required time for polymerization has been found to be quite dependant on the concentration of AIBN. As a guideline, concentrations of AIBN relative to monomers of 1.25, 1.75 or 2 % (w/w) will require polymerization times of 80, 40, or 20 min respectively. However, this relationship may change with variation in the polymerization mixture and temperature, with the purity of the AIBN, with the fused silica capillary ID, or with other parameters.
- After polymerization, the capillary is taken out of the water bath, the pressure fitting is vented and the capillary cut below the level of immersion. Approximately 650 mm of the capillary should be polymerized. This capillary is attached to a 360 µm fused silica high pressure fitting with nano-flow liquid supplied from the injector by a 20 µm ID and 360 µm OD fused silica capillary. The polymer monolith column is flushed with acetonitrile for about 30 min at 6000 psi, then for about 30 min using a flowrate of 400 nL/min. The polymer monolith is then ready to be used as a liquid chromatography column and can be cut to a length of 600 mm. A length of 50 mm can be used as trap column.

### 600 mm long and 0.03 mm ID column

A 600 mm long and 0.03 mm ID polymer monolithic column was prepared in the same way as described above for the 0.05 ID column but with increased pressure correspondingly from 2 to 4 bar for all operations.

By the above described procedures, five polymer monolithic columns were prepared using the compositions and conditions indicated for Examples 1 to 5 in Table 1 below, viz. three 0.05 mm ID columns (Examples 1-3), one 0.03 mm ID column (Example 4), and one 0.02 mm ID column (Example 5).

**TABLE 1**

| ***Example number*** | ***1*** | ***2*** | ***3*** | ***4*** | ***5*** |
|---|---|---|---|---|---|
| Fused silica capillary ID (mm) | 0.05 | 0.05 | 0.05 | 0.03 | 0.02 |
| Length (mm) | 940 | 940 | 940 | 940 | 940 |
| Volume of isobutanol (mL) | 0.8 | 0.8 | 0.8 | 0.8 | 0.8 |
| Volume of octanol (mL) | 0.8 | 0.8 | 0.8 | 0.8 | 0.8 |
| Volume of chloroform (mL) | 0.09 | 0.16 | 0.09 | 0.09 | 0.09 |
| Volume of isodecylacrylate (mL) | 0.09 | 0.07 | 0.09 | 0.09 | 0.09 |
| Volume of 80% technical grade divinylbenzene (mL) | 0.9 | 0.8 | 0.85 | 0.85 | 0.85 |
| Estimated composition of isobutanol (% v/v) | 29.85 | 30.42 | 30.42 | 30.42 | 30.42 |
| Estimated composition of octanol (% v/v) | 29.85 | 30.42 | 30.42 | 30.42 | 30.42 |
| Estimated composition of chloroform (% v/v) | 3.36 | 6.08 | 3.42 | 3.42 | 3.42 |
| Estimated composition of isodecylacrylate (% v/v) | 3.36 | 2.66 | 3.42 | 3.42 | 3.42 |
| Estimated composition of 80% technical grade divinylbenzene (% v/v) | 33.58 | 30.42 | 32.32 | 32.32 | 32.32 |
| Measured weight of azoisobutyronitrile. AIBN (mg) | 18.3 | 10.3 | 15.5 | 15.5 | 15.5 |
| Measured weight of isobutanol (mg) | 672.7 | 653.52 | 681.5 | 681.5 | 681.5 |
| Measured weight of octanol (mg) | 696.2 | 677.35 | 690.38 | 690.38 | 690.38 |
| Measured weight of chloroform (mg) | 146.6 | 261.79 | 148.65 | 148.65 | 148.65 |
| Measured weight of isodecylacrylate (mg) | 91.4 | 76.31 | 87.03 | 87.03 | 87.03 |
| Measured weight of 80% technical grade divinylbenzene (mg) | 815 | 737.01 | 782.17 | 782.17 | 782.17 |
| Total weight of all components (mg) | 2440.2 | 2416.28 | 2405.23 | 2405.23 | 2405.23 |
| Estimated composition of azoisobutyronitrile. AIBN (% w/w) | 0.75 | 0.43 | 0.64 | 0.64 | 0.64 |
| Estimated composition of AIBN relative to monomers (% w/w) | 1.98 | 1.25 | 1.75 | 1.75 | 1.75 |
| Estimated composition of isobutanol (% w/w) | 27.57 | 27.16 | 28.52 | 28.52 | 28.52 |
| Estimated composition of octanol (% w/w) | 28.53 | 28.15 | 28.89 | 28.89 | 28.89 |
| Estimated composition of chloroform (% w/w) | 6.01 | 10.88 | 6.22 | 6.22 | 6.22 |
| Estimated composition of isodecylacrylate (% w/w) | 3.75 | 3.17 | 3.64 | 3.64 | 3.64 |
| Estimated composition of 80% technical grade divinylbenzene (% w/w) | 33.40 | 30.63 | 32.73 | 32.73 | 32.73 |
| Filling and polymerization nitrogen pressure measured at gauge (bar) | 2.0 | 2.0 | 2.0 | 4.0 | 5.0 |
| Filling and polymerization temperature (°C) | 68.4 - 69.2 | 65.5 - 66.1 | 66.4 - 67.1 | 66.7 - 66.8 | 66.8 - 66.9 |
| Filling time (min) | 10 | 16 | 8 | 10 | 10 |
| Polymerization time (min) | 21 | 81 | 40 | 41 | 31 |

### 150 mm long and 2.1 mm ID column

A 150 mm long and 2.1 mm ID polymer monolithic column was prepared following the procedure described below.
- Stainless steel tubing of 1/8" OD, 2.1 mm ID and 150 mm length was degreased with acetone, followed by activation with 35% fuming hydrochloric acid for 60 min, followed by flushing with water and drying at 95°C overnight.
- Silanization was performed with 10% yMAPS in xylene for 60 min at 75 °C, followed by flushing with xylene and acetone.
- The polymerization mixture consisted of 29.7% octanol, 29.4% isobutanol, 10.7% chloroform, 2.5% isodecylacrylate, 26.3% divinylbenzene, and 1.4% lauroyl peroxide.
- The silanized stainless steel tube was filled with the polymerization mixture and capped in both ends, followed by polymerization at 75°C for 90 minutes.
- The polymer monolithic column was then fitted with two stainless steel 1/8" to 1/16" reducing unions, and coupled to a high pressure supply of acetonitrile for flushing out unreacted components and solvents for about 30 minutes at a flowrate of 0.4 mL/min.
- The column was then installed in a liquid chromatograph coupled to a detector, e.g. a mass spectrometer, for carrying out chemical analysis.

### Separation experiments

### Separation of tryptic peptides from cerebrospinal fluid (CSF)

A polymer monolithic column 600 x 0.05 mm ID prepared as described above using a similar composition and conditions as indicated for Example 2 in Table 1 was applied for separation of tryptic digest peptides from cerebrospinal fluid (CSF). The sample was injected using a loop injector (loop size 2 µl) mounted as standard equipment on a commercial nano UPLC system (Waters, USA).

| | | |
|---|---|---|
| Injection: | 2 µl at 400 nL/min | (0-19 min) |
| Flow: | 200 nL/min | (20-70 min) |
| Mobile phase composition: | A) 0.1% formic acid | |
| | B) 0.1% formic acid in acetonitrile | |
| Gradient: | 2% B | (0-20 min) |
| | 30% B | (50 min) |
| | 70% B | (60 min) |

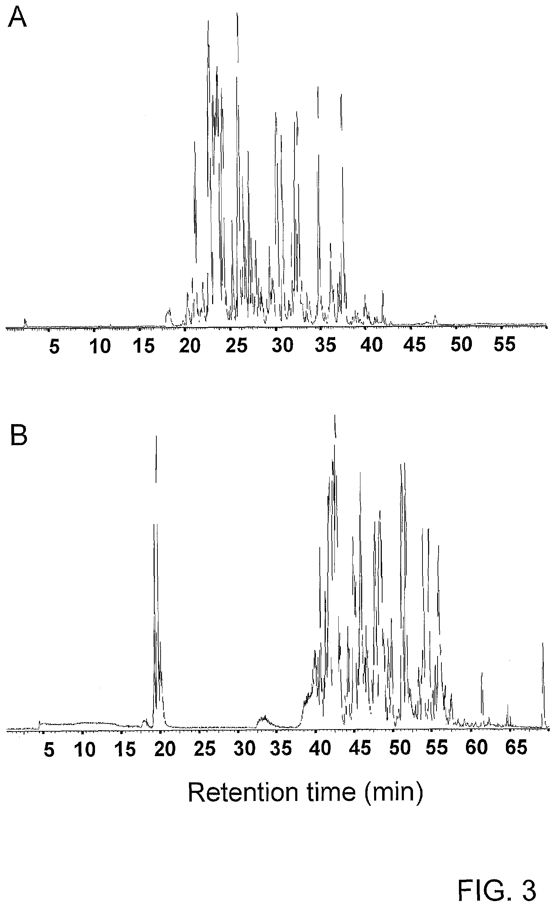

The result is shown in Figure 3, chromatogram B.

For comparison, the same sample was also separated on a commercial 150 mm long and 0.075 mm ID C18 nanoAcquity column packed with 1.7 µm particles (Waters, USA). In this case, a trap column was used to speed up the injection, hence elution of peptides occurred about 20 minutes earlier than with direct injection on the polymer monolith.

| | | |
|---|---|---|
| Injection: | 2 µl at 10 µL/min | (trap column) |
| Flow: | 300 nL/min | |
| Mobile phase composition: | A) 0.1% formic acid | |
| | B) 0.1% formic acid in acetonitrile | |
| Gradient: | 2% B | (0-2 min) |
| | 30% B | (30 min) |
| | 80% B | (40 min) |

The result is shown in Figure 3, chromatogram A.

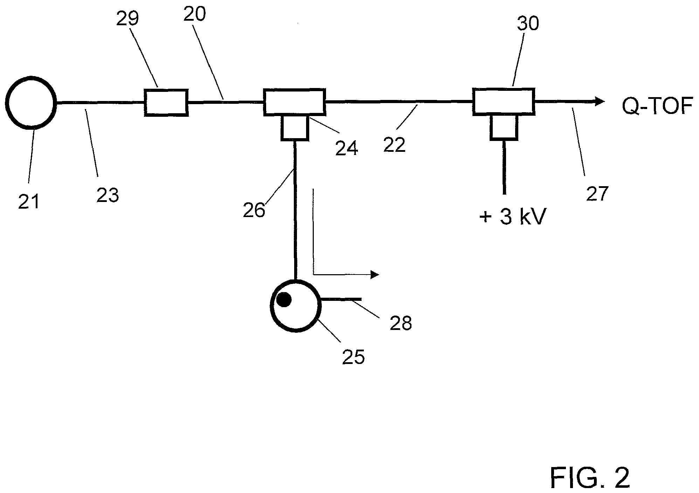

In order to shorten the injection time for the separation in chromatogram B in Figure 3 (approximately 20 min), by using a higher flow rate during sample injection, a set-up shown in Figure 2 containing a trap column was constructed.

Here a polymer monolith trap column 20 in the form of a short piece of the 0.05 mm ID polymer monolith used as analytical column is provided between the injector 21 and the analytical capillary column 22 via a capillary 23 (20 µm ID), a union 29 and a T-coupling 24, which is also connected to a vent 25 through a 20 µm ID capillary 26 (20 µm ID). The analytical column 22 is further connected via a nano-electrospray emitter 27 (Pico-Tip®) to a Q-TOF mass spectrometer. High voltage is introduced to the liquid flow by a T-coupling 30. Vent 25 is connected to waste 28 at the time of injection, 3-5 µl/min (4000-6000 psi), and is plugged after injection to lead the flow to the analytical column 22.

This is similar to the standard set-up for the commercial Acquity nanoUPLC columns (Waters, USA). Different low volume fittings were used and dead volumes were minimized at every point. The cut edges of both the transfer capillary and polymer monolith capillary were observed by a microscope before coupling.

Tryptic peptides from CSF were injected at high flow onto this trap column and further separated on the 600 mm long and 0.05 mm ID polymer monolith. Because the analytical flow rate was as low as 200 nL/min, the time for the gradient to reach the column would be quite long. Therefore, the gradient was started using a higher flow rate (400 nL/min) for 9 min, thus parking the gradient in the dwell volume in front of the column before the flowrate of 200 nL/min was set.

| | | |
|---|---|---|
| Injection: | 2 µl at 3 µl/min for 5 min/(trap column) | |
| Flow | 400 nL/min | (1-9 min) |
| | 200 nL/min | (10-50 min) |
| Mobile phase composition: | A) 0.1% formic acid | |
| | B) 0.1% formic acid in acetonitrile | |
| Gradient: | 2% B | (0-1 min) |
| | 8% B | (8 min) |
| | 10% B | (10 min) |
| | 30% B | (30 min) |
| | 80% B | (40 min) |

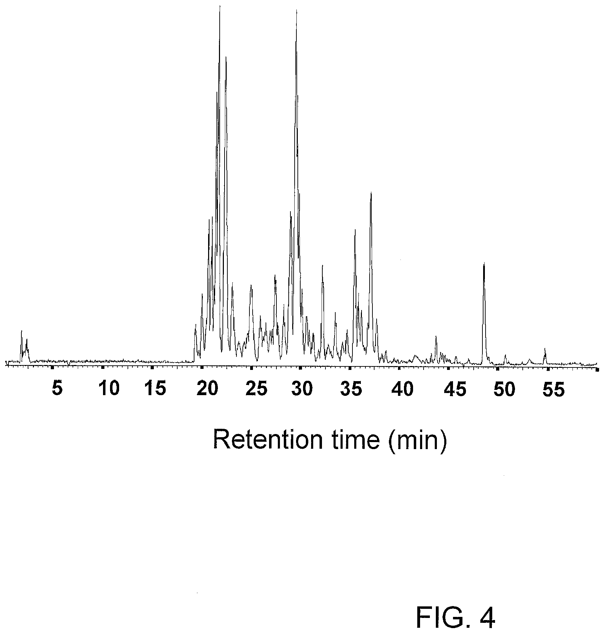

The result is shown in Figure 4.

### Comparison of peak profiles

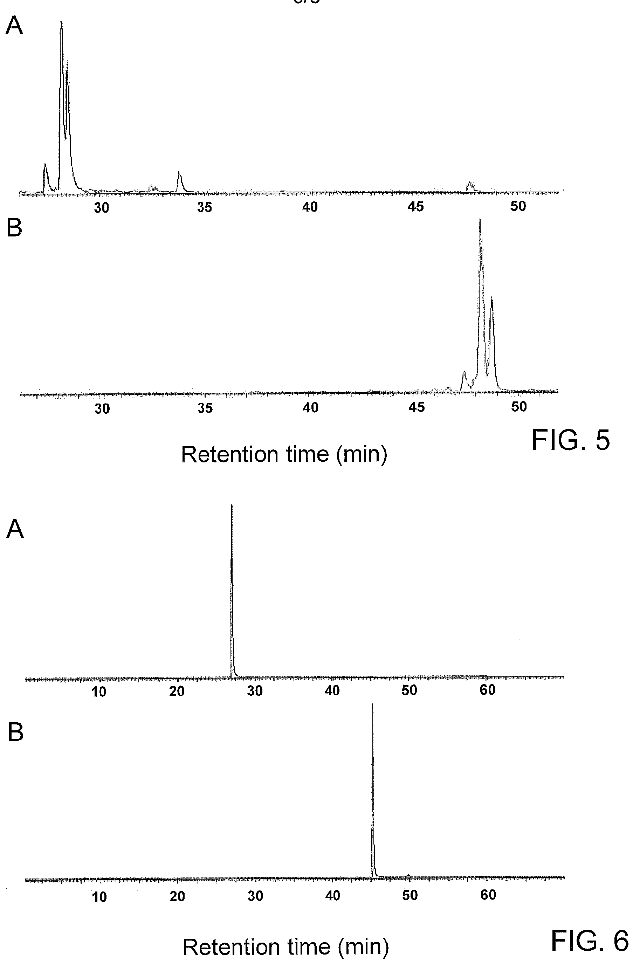

For comparison of peak profiles, ion chromatograms were drawn for different peptide masses. Figure 5 shows the separation of two single charged species with m/z 416.2 separated on A) commercial Acquity nanoUPLC (Waters, USA), and on B) a polymer monolith prepared as described above. Figure 6 shows the corresponding separation of a single charged species with m/z 613.8 separated on A) commercial Acquity nanoUPLC, and on B) polymer monolith prepared as described above.

### Separation of procyanidins

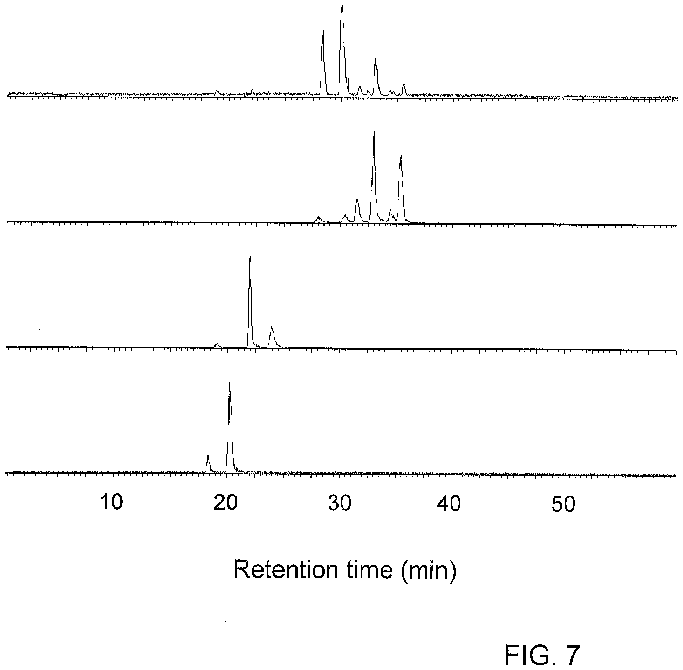

Using a 600 mm long and 0.05 mm ID polymer monolith column, prepared as described above, a variety of procyanidins extracted from fruits were separated and detected by mass spectrometry, using the setup with a trap column. The result is illustrated in Figure 7.

### Separation of tryptic peptides from cerebrospinal fluid (CSF) with 600 mm long and 0.03 mm ID polymer monolith column

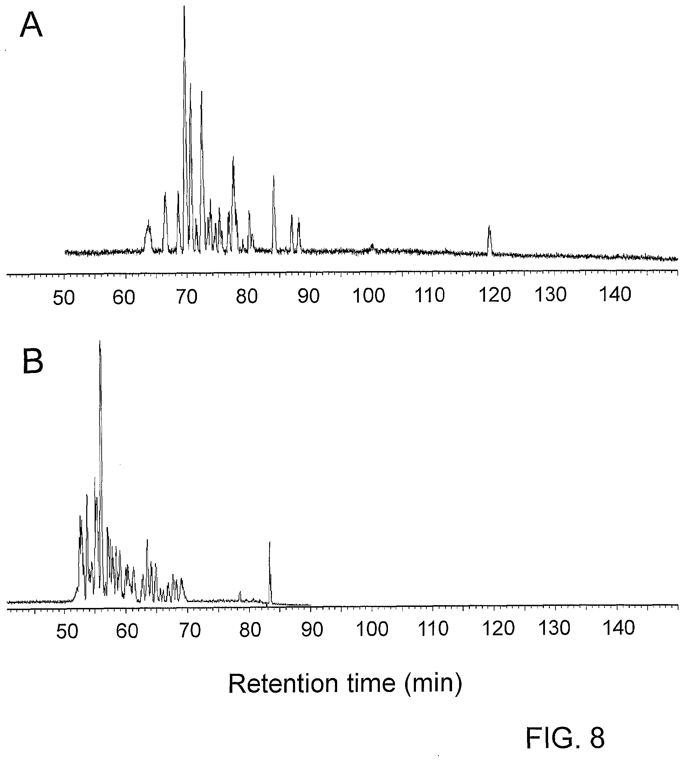

Separation of CSF was performed with a 600 mm long and 0.03 mm ID polymer monolith column, prepared as Example 4 in Table 1 above. Separation of the same sample of tryptic peptides from CSF as above was done at a mobile phase flow rate of 100 nL/min and 200 nL/min. The results are shown in chromatograms A and B, respectively, in Figure 8.

### Separation of tryptic peptides from blood plasma with 150 mm long and 2.1 mm ID polymer monolith column

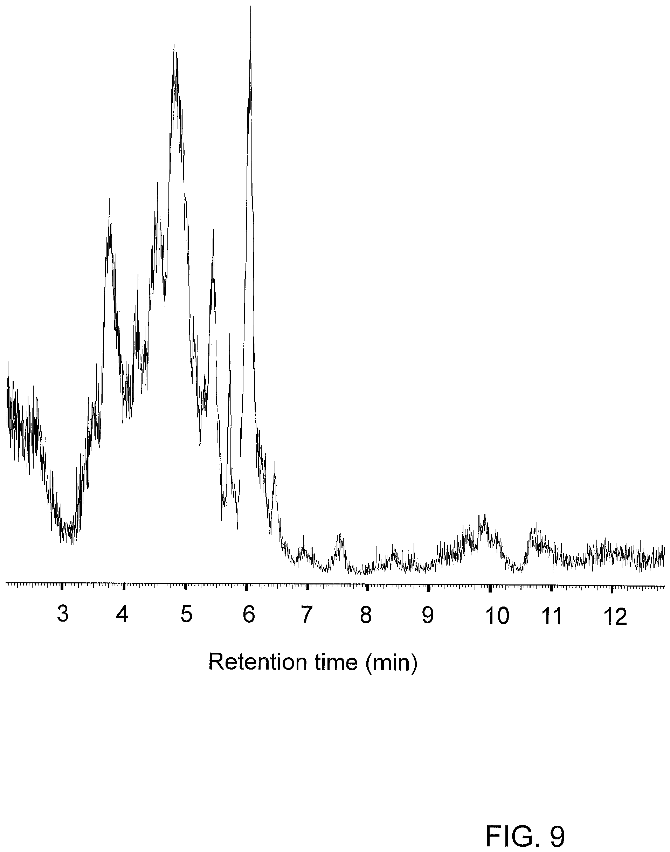

Separation of tryptic peptides from blood plasma was performed with a 150 mm long and 2.1 mm ID polymer monolith column, prepared as described above. Separation was done at a mobile phase flow rate of 0.4 mL/min, using a gradient mixture of 0.1% formic acid and acetonitrile from 2 to 50% acetonitrile. The result is illustrated in Figure 9.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A method of preparing a separation column, or separation channel in a microfabricated device, comprising the steps of: providing an unfilled column, or a microfabricated device comprising an unfilled channel; activating the inner wall of the column or channel with an activating agent; filling the column or channel with a polymerization solution comprising a mixture of monomers, at least one porogen and at least one polymerization initiator; and polymerizing the mixture to form a rigid porous monolithic polymer plug in the column or channel, wherein the activation with the activating agent comprises covalently binding molecules or groups to the surface of the inner wall of the column or channel which can further be bound to the polymer network at the time of polymerization; **characterized in that** the monomers comprise a mixture of divinylbenzene as major monomer and isodecylacrylate, and that the at least one porogen comprises isobutanol.

2. The method according to claim 1, wherein at least the inner wall of the unfilled column or channel comprises a material selected from glass, ceramic, metal, and organic polymer.

3. The method according to claim 2, wherein the unfilled column is a capillary fused silica column.

4. The method according to claim 1, 2 or 3, wherein activating the surface of the inner wall of the column or channel comprises silanization with a silanizing agent.

5. The method according to any one of claims 1 to 4, wherein the surface of the inner wall is etched with an etching agent prior to activating the surface.

6. The method according to any one of claims 1 to 5, wherein the column, or channel in a microfabricated device, has an inner diameter of 0.05 mm or less.

7. The method according to any one of claims 1 to 6, wherein the ratio of isodecylacrylate to divinylbenzene is in the range of from 1:6 to 1:100 (v/v), preferably from 1:10 to 1:30 (v/v).

8. The method according to any one of claims 1 to 7, wherein the at least one porogen is selected from isobutanol, and a mixture of isobutanol and octanol.

9. The method according to any one of claims 1 to 8, wherein the total monomer concentration in the polymerization solution is in the range of from 20 to 50 % (v/v).

10. The method according to any one of claims 1 to 9, wherein the concentration of isodecylacrylate in the polymerization solution is in the range of from 0.1 to 15 % (v/v), preferably from 1 to 5 % (v/v).

11. The method according to any one of claims 1 to 10, wherein the porogens further comprise at least one microporogen selected from chloroform, tetrahydrofuran, toluene and xylene.

12. The method according to any one of claims 4 to 11, wherein the silanization is conducted at a temperature of from 40 to 70 °C for from 2 to 30 minutes.

13. The method according to claim 12, wherein the silanization agent comprises 1 to 20 % (v/v) γ-(trimethoxy-silyl)propyl methacrylate (γMAPS).

14. The method according to any one of claims 5 to 13, wherein the inner wall of the unfilled column or channel comprises glass, preferably fused silica, and the etching agent is an alkali solution, preferably an aqueous solution of sodium hydroxide at a concentration of 0.5 to 2 M, wherein the etching is performed at a temperature of from 40 to 70 °C.

15. The method according to any one of claims 1 to 14, wherein the polymerization is performed at from 60 to 80 °C and a positive pressure of from 1 to 10 bar.

## Patentansprüche

1. Verfahren zur Herstellung einer Trennsäule oder eines Trennkanals in einer Mikrovorrichtung, das die folgenden Schritte umfasst: Bereitstellen einer ungefüllten Säule oder einer Mikrovorrichtung, die einen ungefüllten Kanal umfasst; Aktivieren der Innenwand der Säule oder des Kanals mit einem Aktivierungsmittel; Füllen der Säule oder des Kanals mit einer Polymerisationslösung, die ein Gemisch aus Monomeren, mindestens einem Porogen und mindestens einem Polymerisationsinitiator umfasst; und Polymerisieren des Gemischs, um einen starren porösen monolithischen Polymerstopfen in der Säule oder dem Kanal zu bilden, wobei das Aktivieren mit dem Aktivierungsmittel das kovalente Binden von Molekülen oder Gruppen an die Oberfläche der Innenwand der Säule oder des Kanals umfasst, die ferner zum Zeitpunkt der Polymerisation an das Polymernetz gebunden werden können;
**dadurch gekennzeichnet, dass** die Monomere ein Gemisch aus Divinylbenzol als Hauptmonomer und Isodecylacrylat umfassen, und dass das mindestens eine Porogen Isobutanol umfasst.

2. Verfahren nach Anspruch 1, wobei mindestens die Innenwand der ungefüllten Säule oder des ungefüllten Kanals ein Material umfasst, das aus Glas, Keramik, Metall und organischem Polymer ausgewählt ist.

3. Verfahren nach Anspruch 2, wobei die ungefüllte Säule eine Quarzglas-Kapillarsäule ist.

4. Verfahren nach Anspruch 1, 2 oder 3, wobei das Aktivieren der Oberfläche der Innenwand der Säule oder des Kanals Silanisierung mit einem Silanisierungsmittel umfasst.

5. Verfahren nach einem der Ansprüche 1 bis 4, wobei die Oberfläche der Innenwand mit einem Ätzmittel geätzt wird, bevor die Oberfläche aktiviert wird.

6. Verfahren nach einem der Ansprüche 1 bis 5, wobei die Säule oder der Kanal in einer Mikrovorrichtung einen Innendurchmesser von 0,05 mm oder weniger aufweist.

7. Verfahren nach einem der Ansprüche 1 bis 6, wobei das Verhältnis des Isodecylacrylats zum Divinylbenzol im Bereich zwischen 1:6 und 1:100 (v/v) liegt, vorzugsweise zwischen 1:10 und 1:30 (v/v).

8. Verfahren nach einem der Ansprüche 1 bis 7, wobei das mindestens eine Porogen aus Isobutanol und einem Gemisch aus Isobutanol und Octanol ausgewählt ist.

9. Verfahren nach einem der Ansprüche 1 bis 8, wobei die Gesamtmonomerkonzentration in der Polymerisationslösung im Bereich zwischen 20 bis 50 % (v/v) liegt.

10. Verfahren nach einem der Ansprüche 1 bis 9, wobei die Isodecylacrylatkonzentration in der Polymerisierungslösung im Bereich zwischen 0,1 und 15 % (v/v) liegt, vorzugsweise zwischen 1 und 5 % (v/v).

11. Verfahren nach einem der Ansprüche 1 bis 10, wobei die Porogene ferner mindestens ein Mikroporogen umfassen, das aus Chloroform, Tetrahydrofuran, Toluol und Xylol ausgewählt ist.

12. Verfahren nach einem der Ansprüche 4 bis 11, wobei die Silanisierung bei einer Temperatur zwischen 40 und 70 °C zwischen 2 und 30 Minuten durchgeführt wird.

13. Verfahren nach Anspruch 12, wobei das Silanisierungsmittel 1 bis 20 % (v/v) γ-(Trimethoxy-silyl)propylmethacrylat (γMAPS) umfasst.

14. Verfahren nach einem der Ansprüche 5 bis 13, wobei die Innenwand der ungefüllten Säule oder des ungefüllten Kanals Glas umfasst, vorzugsweise Quarzglas, und das Ätzmittel eine Alkalilösung ist, vorzugsweise eine wässrige Lösung aus Natriumhydroxid mit einer Konzentration von 0,5 bis 2 M, wobei das Ätzen bei einer Temperatur zwischen 40 und 70 °C durchgeführt wird.

15. Verfahren nach einem der Ansprüche 1 bis 14, wobei die Polymerisation zwischen 60 und 80 °C und bei einem positiven Druck zwischen 1 und 10 bar durchgeführt wird.

## Revendications

1. Procédé de préparation d'une colonne de séparation ou d'un conduit de séparation dans un micro-dispositif, comprenant les étapes : de fourniture d'une colonne non remplie ou d'un micro-dispositif comprenant un conduit non rempli ; d'activation de la paroi interne de la colonne ou du conduit avec un agent d'activation ; de remplissage de la colonne ou du conduit avec une solution de polymérisation comprenant un mélange de monomères, au moins un porogène et au moins un initiateur de polymérisation ; et de polymérisation du mélange pour former un bouchon polymère monolithique poreux rigide dans la colonne ou le conduit, dans lequel l'activation avec l'agent d'activation comprend des molécules ou des groupes de liaison covalente à la surface de la paroi interne de la colonne ou du conduit, qui peuvent en outre être liés au réseau polymère au moment de la polymérisation ;
**caractérisé en ce que** les monomères comprennent un mélange de divinylbenzène en tant que monomère majeur et d'acrylate d'isodécyle, et **en ce que** l'au moins un porogène comprend de l'isobutanol.

2. Procédé selon la revendication 1, dans lequel au moins la paroi interne de la colonne ou du conduit non rempli comprend un matériau sélectionné parmi le verre, la céramique, le métal et le polymère organique.

3. Procédé selon la revendication 2, dans lequel la colonne non remplie est une colonne de silice fondue capillaire.

4. Procédé selon la revendication 1, 2 ou 3, dans lequel l'activation de la surface de la paroi interne de la colonne ou du conduit comprend une silanisation avec un agent de silanisation

5. Procédé selon l'une quelconque des revendications 1 à 4, dans lequel la surface de la paroi interne est gravée avec un agent de gravure avant l'activation de la surface.

6. Procédé selon l'une quelconque des revendications 1 à 5, dans lequel la colonne, ou le conduit dans un micro-dispositif, a un diamètre interne de 0,05 mm ou moins.

7. Procédé selon l'une quelconque des revendications 1 à 6, dans lequel le rapport de l'acrylate d'isodécyle au divinylbenzène est compris dans la plage allant de 1:6 à 1:100 (v/v), de préférence de 1:10 à 1:30 (v/v).

8. Procédé selon l'une quelconque des revendications 1 à 7, dans lequel l'au moins un porogène est sélectionné parmi l'isobutanol et un mélange d'isobutanol et d'octanol.

9. Procédé selon l'une quelconque des revendications 1 à 8, dans lequel la concentration totale en monomères dans la solution de polymérisation est comprise dans la plage allant de 20 à 50 % (v/v).

10. Procédé selon l'une quelconque des revendications 1 à 9, dans lequel la concentration en acrylate d'isodécyle dans la solution de polymérisation est comprise dans la plage allant de 0,1 à 15 % (v/v), de préférence de 1 à 5 % (v/v).

11. Procédé selon l'une quelconque des revendications 1 à 10, dans lequel les porogènes comprennent en outre au moins un microporogène sélectionné parmi le chloroforme, le tétrahydrofurane, le toluène et le xylène.

12. Procédé selon l'une quelconque des revendications 4 à 11, dans lequel la silanisation est effectuée à une température allant de 40 à 70 °C pendant 2 à 30 minutes.

13. Procédé selon la revendication 12, dans lequel l'agent de silanisation comprend 1 à 20 % (v/v) de méthacrylate de γ-(triméthoxysilyl)propyle (γMAPS).

14. Procédé selon l'une quelconque des revendications 5 à 13, dans lequel la paroi interne de la colonne ou du conduit non rempli comprend du verre, de préférence de la silice fondue, et l'agent de gravure est une solution alcaline, de préférence une solution aqueuse d'hydroxyde de sodium à une concentration allant de 0,5 à 2 M, dans lequel la gravure est réalisée à une température allant de 40 à 70 °C.

15. Procédé selon l'une quelconque des revendications 1 à 14, dans lequel la polymérisation est effectuée à une température allant de 60 à 80 °C et à une pression positive allant de 1 à 10 bars.
